(19) Europäisches Patentamt / European Patent Office / Office européen des brevets

(11) **EP 3 635 150 B1**

(12) **EUROPÄISCHE PATENTSCHRIFT**

(45) Veröffentlichungstag und Bekanntmachung des Hinweises auf die Patenterteilung:
**18.11.2020 Patentblatt 2020/47**

(51) Int Cl.:
*C23C 8/26* (2006.01)  *B23P 9/04* (2006.01)
*B22D 17/22* (2006.01)  *B22C 9/06* (2006.01)
*C21D 7/06* (2006.01)

(21) Anmeldenummer: **18822138.6**

(22) Anmeldetag: **20.11.2018**

(86) Internationale Anmeldenummer:
**PCT/IB2018/059121**

(87) Internationale Veröffentlichungsnummer:
**WO 2019/097496 (23.05.2019 Gazette 2019/21)**

(54) **VERFAHREN ZUM BEHANDELN DER OBERFLAECHEN VON AUS EINEM STAHLWERKSTOFF BESTEHENDEN FORMTEILEN FÜR GIESSFORMEN**

METHOD FOR TREATING THE SURFACES OF MOULD PARTS CONSISTING OF A STEEL MATERIAL FOR CASTING MOULDS

PROCÉDÉ POUR LE TRAITEMENT DE SURFACES DE PIÈCES MOULÉES CONSTITUÉES PAR UN MATÉRIAU D'ACIER POUR MOULES DE COULÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.11.2017 DE 102017127299**

(43) Veröffentlichungstag der Anmeldung:
**15.04.2020 Patentblatt 2020/16**

(73) Patentinhaber: **Nemak, S.A.B. de C.V.**
**66000 García, Nuevo León (MX)**

(72) Erfinder:
• SCHEIL, Jan
  65185 Wiesbaden (DE)
• VIECHTBAUER, Christoph
  65812 Bad Soden am Taunus (DE)
• GROZA, Ugis
  1020 Wien (AT)
• LECHNER, Christoph
  1230 Wien (AT)
• BLEICHER, Friedrich
  1140 Wien (AT)

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
EP-A1- 2 484 493      WO-A1-2011/142479
DE-A1-102009 025 621   FR-A1- 2 611 551
US-A1- 2006 201 650

• SEITZ M ET AL: "Effect of process parameters on surface roughness in hammer peening and deep rolling", KEY ENGINEERING MATERIALS, TRANS TECH PUBLICATIONS LTD., STAFA-ZURICH, CH, Bd. 554-557, 1. Januar 2013 (2013-01-01), Seiten 1887-1901, XP009510523, ISSN: 1013-9826, DOI: 10.4028/WWW.SCIENTIFIC.NET/KEM.554-557.18 8 7
• F. BLEICHER, CH. LECHNER, CH. HABERSOHN, M. OBERMAIR, F. HEINDL, M. RODRIQUEZ RIPOLL: "Improving the tribological characteristics of tool and mould surfaces by machine hammer peening", CIRP ANNALS - MANUFACTURING TECHNOLOGY, Bd. 62, 2013, XP002788185,

**Beschreibung**

Die Erfindung betrifft ein Verfahren zum Behandeln der Oberflächen von aus einem Stahlwerkstoff bestehenden Formteilen für Gießformen, welche zur gießtechnischen Herstellung von Gussteilen aus einer Leichtmetallschmelze vorgesehen sind. Bei den Gießformen, in denen solche Formteile eingesetzt werden, handelt es sich insbesondere um Dauergießformen, wie sie beispielsweise in Druckgussverfahren eingesetzt werden.

Bei der Herstellung von Gussteilen aus Leichtmetallschmelzen werden die Formteile der Gießform hohen thermischen Wechselbelastungen ausgesetzt. Daher werden die Formteile üblicherweise aus Warmarbeitsstählen hergestellt, die aufgrund ihrer Zusammensetzung und der bei ihrer Erzeugung und Verarbeitung durchlaufenen Prozessschritte eine hohe Beständigkeit gegen den im Gießbetrieb aufgrund des häufigen Wechsels von Erwärmung und Abkühlung auftretenden thermischen Stress aufweisen.

Typische Beispiele für Warmarbeitsstähle, die zur Herstellung von Formteilen für Druckgussformen verwendet werden, sind die unter den Werkstoffnummern 1.2343 (AISI-Bezeichnung H11), 1.2344 (AISI-Bezeichnung "H13") oder 1.2340 (auch unter der Bezeichnung "E38K" bekannt) genormten Stähle.

Neben den thermischen Belastungen unterliegen die aus Stahlwerkstoff geformten Formteile von Gießformen im Bereich ihrer unmittelbar mit der jeweils vergossenen Metallschmelze in Kontakt kommenden Flächen der Gefahr eines hohen abrasiven Verschleißes.

Um auch in dieser Hinsicht die Formteile so zu ertüchtigen, dass sie trotz der auf sie im Gebrauch wirkenden Belastungen eine lange Lebensdauer erreichen, werden die Formteile in der Regel einer Behandlung unterzogen, deren Ziel die Steigerung der Härte und damit einhergehend der Beständigkeit gegen Verschleiß und Rissbildung in einer an die Oberfläche des Formteils angrenzenden Randschicht des Formteils ist. Dagegen soll der Kernbereich des Formteils eine ausreichende Zähigkeit behalten, um den im Gebrauch auftretenden thermischen und mechanischen Belastungen standzuhalten.

Es stehen verschiedene Verfahren zur Oberflächenhärtung zur Verfügung. Hierzu zählen das Gasnitrieren, das Carbonitrieren, das Nitrocarburieren und das Plasma-Nitrieren. Jedes dieser Nitrierverfahren beruht darauf, dass die zu härtende Randschicht mit Stickstoff angereichert wird, wobei gegebenenfalls gleichzeitig auch eine Anreicherung mit Kohlenstoff erfolgt.

Die von der Oberfläche des jeweiligen Formteils in den Stahlwerkstoff eindiffundierenden Stickstoffatome bilden mit den dort vorhandenen Legierungselementen, wie beispielsweise Aluminium, Chrom, Molybdän, Vanadium oder Titan, Nitride, die sich durch eine hohe Härte auszeichnen. Es entsteht auf diese Weise eine oberflächennahe Diffusionsschicht, die aufgrund der Anwesenheit der Nitride eine gegenüber dem Kernwerkstoff erhöhte Härte besitzt. Dabei ist die Diffusionsschicht an der Oberfläche des Formteils durch eine Verbindungsschicht bedeckt, die aus Verbindungen der Bestandteile des Stahlwerkstoffs mit Stickstoff, insbesondere Eisen-Nitriden, besteht. Diese Verbindungsschicht wird in der Fachliteratur häufig auch als "weiße Schicht" ("white layer") bezeichnet. Die an den Kernwerkstoff des Formteils angrenzende Diffusionsschicht und die auf der Diffusionsschicht liegende und an die freie Oberfläche des Formteils angrenzende Verbindungsschicht bilden gemeinsam die nitriergehärtete Randschicht. Besonders ausgeprägt tritt die Verbindungsschicht bei Formteilen auf, die durch Gasnitrieren randschichtgehärtet sind.

In der Praxis hat sich insbesondere das Gasnitrieren als vergleichbar kostengünstige Möglichkeit des Nitrierhärtens herausgestellt. Beim Gasnitrieren werden die zu härtenden Formteile bei einer Temperatur von typischerweise 500 °C unter einer $NH_3$-haltigen Atmosphäre gehalten. Aus dieser Atmosphäre wird atomarer Stickstoff abgespalten, der in die Formteiloberfläche eindiffundiert. Bei Formteilen, die aus den oben bereits genannten Warmarbeitsstählen bestehen, lassen sich auf diese Weise nitriergehärtete Randschichten mit einer Dicke von typischerweise 0,1 - 0,4 mm erzeugen, wobei die Dicke der Verbindungsschicht typischerweise im Bereich von 50 $\mu$m liegt.

Aus der WO 2011/142479 A1 ist bekannt, dass die Verbindungsschicht Wärmerisse und Abrieb an der Form verursachen kann. Um die Verbindungsschicht zu beseitigen, schlägt die WO 2011/142479 A1 vor, das jeweilige Formteil zunächst in einem Gasnitrierverfahren randschichtzuhärten. Die dabei entstehende, 2 - 7 $\mu$m dicke Verbindungsschicht wird anschließend dadurch beseitigt, dass das zum Gasnitrieren eingesetzte Ammoniakgas aus dem Nitrierofen abgezogen und ein atmosphärisches Gas in den Ofen geleitet wird, um eine thermische Behandlung zum Zersetzen der Stickstoffverbindung auszuführen. Abschließend wird dann noch eine Kugelstrahlbehandlung durchgeführt, um die Verbindungsschicht auch mechanisch zu entfernen.

Auch beim aus der EP 2 484 493 A1 bekannten Stand der Technik wird eine auf einem nitriergehärteten Gießgesenk vorhandene Verbindungsschicht ("white layer") durch Kugelstrahlen entfernt.

In der DE 199 46 957 C1 ist als weitere Möglichkeit der Entfernung von Belägen auf einem metallischen, insbesondere aus einem Stahlwerkstoff bestehenden Substraten, das so genannte "Nadeln" vorgeschlagen worden. Beim Nadeln wird die jeweilige Oberfläche mit den Spitzen einer Vielzahl von Nadeln bearbeitet, die periodisch auf den auf dem jeweiligen Substrat liegenden Belag einwirken und ihn so abrasiv beseitigen. Die aus gehärtetem Stahl bestehenden Nadeln sind dazu in einem handgehaltenen Gerät axial gelagert und schlagen in der Regel pneumatisch angetrieben mit hoher Frequenz auf die zu bearbeitende Oberfläche. Indem gleichzeitig mit der Nadelbearbeitung die zu bearbeitende Oberfläche einer Kältebehandlung, beispielsweise durch Bestrahlen mit flüssigem $CO_2$, unterzogen wird, soll der Materialabtrag besonders effektiv und schonend erfolgen. Als Anwendungsbeispiele für das Nadeln ist das Entrosten von Schiffskörpern genannt, für das ein Strahlen mit Sand, Trockeneis oder Kugeln aufgrund des dabei aufzufangenden und zu entsorgenden Strahlmittels zu aufwändig ist (siehe auch https://de.wikipedia.org/wiki/Nadelentroster). Mehr oder weniger lose auf einem Bauteil liegende, aus Eisenoxid bestehende Rostbeläge können nicht verglichen werden mit Verbindungsschichten, wie sie bei Formteilen für Gießformen im Zuge einer Nitrierhärtung durch Einlagerung von Stickstoff in das jeweilige Stahlsubstrat und die damit einhergehend an der Oberfläche des nitriergehärteten Bauteils sich bildenden Stickstoffverbindungen entstehen.

Praktische Erfahrungen haben gezeigt, dass sich bei Formteilen von Gießformen, in denen Leichtmetallschmelzen, insbesondere Schmelzen auf Aluminiumbasis, vergossen werden, trotz ihrer Randschichthärtung schnell fortschreitende Risse bilden, die die Formteile frühzeitig unbrauchbar machen.

Vor diesem Hintergrund hat sich die Aufgabe gestellt, ein Verfahren zu schaffen, mit dem sich Formteile für den Leichtmetallguss so behandeln lassen, dass die Gefahr einer Rissbildung im Bereich der mit der Leichtmetallschmelze beim Abguss in Kontakt kommenden Oberflächenabschnitte des Formteils auf ein Minimum reduziert ist.

Die Erfindung hat diese Aufgabe durch das in Anspruch 1 angegebene Verfahren gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Beim erfindungsgemäßen Verfahren zum Behandeln der Oberflächen von aus einem Stahlwerkstoff bestehenden Formteilen von Gießformen, welche zur gießtechnischen Herstellung von Gussteilen aus einer Leichtmetallschmelze vorgesehen sind, werden folglich mindestens folgende Arbeitsschritte durchlaufen:

a) Nitrierbehandeln des Formteils zur Erzeugung einer an die freie Oberfläche des Formteils angrenzenden nitriergehärteten Randschicht, welche eine höhere Härte aufweist als der innenliegende Kernbereich des Formteils und eine an den Kernbereich angrenzende Diffusionsschicht sowie eine auf der Diffusionsschicht liegende und an die freie Oberfläche des Formteils angrenzende Verbindungsschicht umfasst;

b) mechanisches Bearbeiten mindestens eines Abschnitts der freien Oberfläche des Formteils, wobei die mechanische Bearbeitung durch maschinelles Oberflächenhämmern erfolgt, bei dem ein Schlaghammer-Werkzeug, das in einer bestimmten Schlagfrequenz eine Schlagbewegung entlang einer Bewegungsachse ausführt, die in Bezug auf die freie Oberfläche unter einem bestimmten spitzen Winkel ausgerichtet ist, einer in einem vorausgegangenen Auslegungsschritt bestimmten Bahn folgend kontinuierlich über die freie Oberfläche des Formteils geführt wird, so dass durch die schlagende Belastung im Auftreffbereich des Schlaghammer-Werkzeugs die Verbindungsschicht entfernt wird.

Die Erfindung nutzt somit die an sich bekannte Möglichkeit, die Härte eines Formteils für Druckgussformen durch eine Nitrierbehandlung in einem oberflächennahen Randbereich des Formteils so zu erhöhen, dass die grundsätzliche Voraussetzung für eine verbesserte Verschleißbeständigkeit geschaffen ist.

Grundsätzlich kann die erfindungsgemäß vorgesehene Nitrierbehandlung (Arbeitsschritt a)) mit jedem geeigneten und aus der Praxis bekannten Nitrierverfahren durchgeführt werden. Hierzu stehen beispielsweise die oben schon erwähnten konventionellen Badnitrier- oder Plasmanitrier-Verfahren zur Verfügung.

Unter Kostengesichtspunkten und aus prozesstechnischer Sicht als besonders effektiv erwiesen hat es sich, wenn die Nitrierbehandlung im Arbeitsschritt a) des erfindungsgemäßen Verfahrens in an sich bekannter Weise als Gasnitrieren durchgeführt wird, bei dem das jeweils behandelte Formteil bei geeigneter Temperatur unter einer stickstoffhaltigen Atmosphäre gehalten wird. Die jeweils vorgesehene Nitrierbehandlung unterliegt dabei keinen Beschränkungen, sondern kann in jeder für diesen Zweck bekannten Weise durchgeführt werden.

Der Erfindung liegt nun die Erkenntnis zu Grunde, dass die Verbindungsschicht zur Bildung von Mikrorissen neigt, die den Ausgangspunkt für die Entstehung von Rissen in der nitriergehärteten Randschicht und die darauf folgende Infiltration der Randschicht durch Gussmetall bilden, durch die der Rissfortschritt beschleunigt wird.

Um diese Gefahr zu beseitigen, sieht die Erfindung eine mechanische Bearbeitung zumindest der Abschnitte der freien, mit der Verbindungsschicht belegten Oberfläche des Formteils vor, an denen es beim Abgießen der Metallschmelze in die Gießform zu einem intensiven Kontakt zwischen Schmelze und Formteil kommt und die insoweit besonders rissgefährdet sind. Die mechanische Bearbeitung besteht dabei in einem maschinellen Oberflächenhämmern, in der Fachsprache üblicherweise "Machine Hammer Peening" ("MHP") genannt, welches so durchgeführt wird, dass die Verbindungsschicht zumindest im Auftreffbereich des für die Bearbeitung eingesetzten Schlaghammer-Werkzeugs weitestgehend vollständig entfernt wird.

Das maschinelle Oberflächenhämmern dient üblicherweise dazu, Oberflächen an metallischen Bauteilen einzuglätten und aufzuhärten. Hierzu wird eine Hartmetallkugel zyklisch gegen die zu bearbeitende Oberfläche beschleunigt. Durch den Aufprall der Kugel ergeben sich an der Oberfläche plastische Verformungen. Die damit einhergehende Kaltverfestigung führt zu Druckeigenspannungen unter der behandelten Oberfläche. Die Hartmetallkugel wird dabei üblicherweise von einem Stößel getragen, über den sie elektromagnetisch, pneumatisch oder piezoelektrisch beschleunigt wird. Die im Moment des Aufpralls der Hartmetallkugel auf die bearbeitete Fläche wirkende Hertz'sche Spannung wird durch den Kugeldurchmesser bestimmt. Gleichzeitig lassen sich die auf die Oberfläche beim Aufprall wirkenden Kräfte durch Einstellung der Geschwindigkeit der Hartmetallkugel, des von der Kugel bei einem Schlag zurückgelegten Hubs oder der Schlagfrequenz steuern. Ebenso kann über den Abstand der Spuren, denen das Hammerwerkzeug bei der Bearbeitung folgt, die in die bearbeitete Oberfläche eingebrachte Verformungsenergie und damit einhergehend die dort erzeugten Druckspannungen beeinflusst werden.

Die beim Oberflächenhämmern üblicherweise als Schlagwerkzeug eingesetzte Kugel besteht typischerweise aus einem Hartmetall, wie einem Karbid-Werkstoff, wie beispielsweise WC-Co oder desgleichen. Derartige für die erfindungsgemäßen Zwecke besonders geeignete, aus Karbid-Werkstoff bestehende Kugeleinsätze weisen typischerweise eine Härte von mindestens 2000 HV auf und sind auf diese Weise in der Lage, hohe Schlagenergien auf die zu bearbeitende, wesentlich weniger harte Oberfläche zu übertragen und diese zu verformen, ohne dabei selbst verformt zu werden. Dies erlaubt es, mittels derart beschaffener Hartmetallkugel-Werkzeuge beim Auftreffen auf die jeweils bearbeitete Oberfläche Energieeinträge von typischerweise mindestens 63 mJ zu erzielen. Dieser Energieeintrag ist mehr als sechzigmal größer als der Energieeintrag, welcher typischerweise beim konventionellen Kugelstrahlen mit aus Stahl bestehenden Kugeln oder auch beim oben ebenfalls erörterten "Nadeln" erzielt werden kann.

Das aus dem Stößel und der Hartmetallkugel gebildete Werkzeug wird während der Hammerbearbeitung mäanderförmig über die Werkstückoberfläche geführt. Um die bei der Hammerbearbeitung auftretenden hohen Kräfte beherrschen zu können und eine planvolle Bewegung des Werkzeugs zu gewährleisten, ist für die Bewegung des Werkzeugs maschinelle Unterstützung erforderlich. Daher wird das Hammerwerkzeug üblicherweise mittels eines Roboters oder mittels eines von Werkzeugmaschinen bekannten Kreuzschlittenantriebes bewegt.

Charakteristisch für das erfindungsgemäß eingesetzte Oberflächenhämmern ist somit, dass es über eine gezielte Variation der voranstehend erläuterten Parameter die systematische, kontrollierte Bearbeitung der jeweiligen Oberfläche nach vorgegebenem Muster ermöglicht, so dass exakt reproduzierbare Arbeitsergebnisse erzielt werden können.

In dieser Hinsicht ist es von besonderer Bedeutung, dass beim erfindungsgemäßen Verfahren die Bewegungsachse, entlang der das Schlaghammer-Werkzeug seine Schlagbewegung ausführt, nicht senkrecht, sondern in Bezug auf den jeweils zu bearbeitenden Abschnitt der freien Oberfläche des Formteils so ausgerichtet ist, dass zwischen der freien Oberfläche und der Bewegungsachse des Schlaghammer-Werkzeugs ein spitzer Winkel, also ein Winkel, der kleiner 90° ist, eingeschlossen ist.

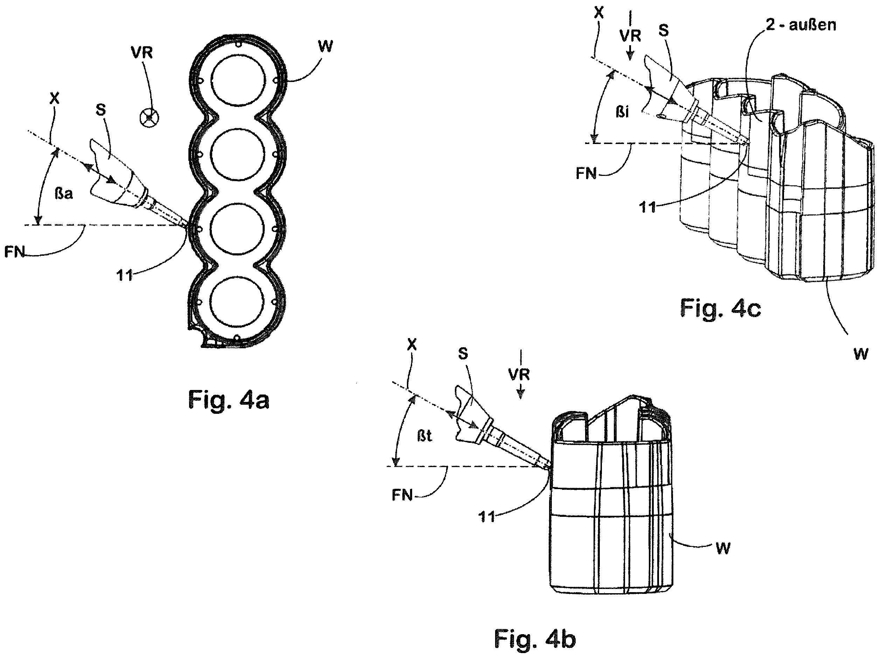

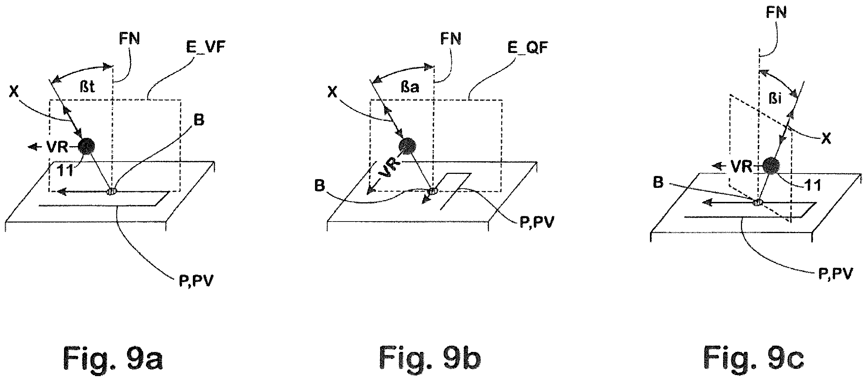

Wie anhand der Figuren 4a - 4c und 9a - 9c nachvollzogen werden kann, kann der erfindungsgemäß einzuhaltende spitze Winkel als der so genannte "Kippwinkel" festgelegt werden. Als "Kippwinkel" ("ßt") wird dabei das Winkelmaß zwischen der auf die Werkstückoberfläche errichteten Flächennormalen FN im Berührpunkt B mit dem Hammerkopf 11 und der Bewegungsachse X der Hubbewegung des Hammerkopfes 11 in der Ebene "Vorschubrichtung - Flächennormale" E_VF bezeichnet. Die Ausrichtung der Bewegungsachse X wird hier so gewählt, dass die Bearbeitung längs zur Vorschubrichtung VR in Richtung des bearbeiteten Materials, also "schleppend", erfolgt (s. Fig. 4b, 9a).

Der erfindungsgemäß einzuhaltende spitze Winkel zwischen der Bewegungsachse X und der zu bearbeitenden Werkstückoberfläche O kann aber auch als der "Anstellwinkel" ("ßa") definiert werden. Beim Anstellwinkel ßa handelt es sich um das Winkelmaß zwischen der Flächennormalen FN der Werkstückoberfläche O im Berührpunkt B mit dem Hammerkopf 11 und der Achse X der Hubbewegung des Hammerkopfes 11 in der Ebene E_QV quer zur Vorschubrichtung VR. Auch hier ist das Winkelmaß so gewählt, dass eine schleppende Bearbeitung durchgeführt wird, also Anstellwinkel ßa eingestellt werden, die größer "0" sind (s. Fig. 4a, 9b).

Schließlich kann es sich bei dem erfindungsgemäß einzuhaltenden spitzen Winkel zwischen der Bewegungsachse X des Schlaghammer-Werkzeugs (Hammerkopf 11) und der zu bearbeitenden Werkstückoberfläche O - bevorzugt - auch um den "Auftreffwinkel" ("ßi") handeln. Der Auftreffwinkel ßi bezeichnet das kleinstmögliche Winkelmaß zwischen der Flächennormalen FN der Werkstückoberfläche O im Berührpunkt B mit dem Hammerkopf 11 und der Achse X der Hubbewegung des Hammerkopfes 11 als Kombination aus Kippwinkel ßt und Anstellwinkel ßa (s. Fig. 4c, 9c).

Praktische Versuche haben bestätigt, dass bei einer derart schrägen Ausrichtung des Schlaghammer-Werkzeugs die Verbindungsschicht im Auftreffbereich des Werkzeugs schuppen- oder flockenartig von der Oberfläche abspringt. Auf diese Weise lässt sich die Verbindungsschicht in den hinsichtlich der Rissbildung kritischen Bereichen des Formteils mit hoher Effizienz weitestgehend vollständig entfernen.

Typischerweise beträgt zu diesem Zweck der jeweilige Winkel, den die Bewegungsachse des Schlaghammer-Werkzeugs mit einer auf dem jeweils bearbeiteten Abschnitt der freien Oberfläche des Formteils errichteten Flächennormalen einschließt, mindestens 10°, wobei sich ein maximaler Winkel von 50° bewährt hat. Als besonders günstig hat es sich in dieser Hinsicht erwiesen, wenn der Winkel zwischen der freien Oberfläche des jeweils bearbeiteten Abschnitts des Formteils und der Bewegungsachse des Schlaghammer-Werkzeugs mindestens 15° beträgt, wobei sich ein Winkel von mindestens 20° als besonders effektiv erwiesen hat. Dabei hat es sich ebenso im Hinblick auf die Optimierung der Effektivität der Oberflächenbehandlung als vorteilhaft bewährt, wenn der betreffende Winkel zwischen der Flächennormalen und der Bewegungsachse auf höchstens 45° beschränkt ist.

Im Fall, dass der Anstellwinkel ßa oder der Auftreffwinkel ßi als der erfindungsgemäß einzuhaltende spitze Winkel der Ausrichtung der Bewegungsachse des Schlaghammer-Werkzeugs in Bezug auf die jeweils zu bearbeitende Oberfläche gewählt werden, haben sich Anstellwinkel ßa oder Auftreffwinkel ßi von jeweils >25° bis 45° bewährt. Wird dagegen der Kippwinkel ßt als erfindungsgemäß einzustellender Winkel der Ausrichtung der Bewegungsachse in Bezug auf die jeweils zu bearbeitende Oberfläche herangezogen, so haben sich Kippwinkel ßt von >20° bis 45° bewährt. Optimalerweise wird dementsprechend die Bewegungsachse der vom Schlaghammer-Werkzeug während der Schlagbearbeitung ausgeführten Hubbewegung so eingestellt, dass gilt:

$$20° < \text{ßt} \leq 45°$$

$$25° < \text{ßa} \leq 45°$$

$$25° < \text{ßi} \leq 45°$$

Optimale Ergebnisse der erfindungsgemäß durchgeführten MHP-Behandlung stellen sich regelmäßig ein, wenn der Winkel zwischen der Bewegungsachse des Werkzeugs und der auf den jeweils bearbeiteten Oberflächenabschnitt des Formteils errichteten Flächennormalen $30° \pm 7°$, insbesondere $30° \pm 5°$, beträgt.

Durch die erfindungsgemäß durchgeführte MHP-Bearbeitung wird im jeweils bearbeiteten Abschnitt der Oberfläche des Formteils jedoch nicht nur die dort vorhandene Verbindungsschicht entfernt, sondern auch eine Kaltverformung und eine damit einhergehende zusätzliche Kaltverfestigung des vom Schlaghammer-Werkzeug getroffenen oberflächennahen Bereichs der nitriergehärteten Randschicht des Formteils erzielt. Diese Kaltverfestigung trägt zusätzlich zur Beständigkeit der gehärteten Randschicht gegen abrasive, thermische und andere mechanische, im Wechsel stattfindenden Belastungen des Formteils in seinem jeweils erfindungsgemäß bearbeiteten Abschnitt bei und hat ebenso Anteil an der Rissbeständigkeit des Formteils. Gleichzeitig werden durch die erfindungsgemäß vorgesehene MHP-Bearbeitung auch die Druckeigenspannungen in dem oberflächennahen Bereich des Formteils erhöht, wodurch wiederum die Dauerfestigkeit des Formteils beträchtlich verbessert werden. Dabei lassen sich durch die erfindungsgemäße MHP-Behandlung Erhöhungen der Druckeigenspannungen von bis zu 800 MPa erzielen, wobei der Mindestwert der Erhöhung der Druckeigenspannungen bei erfindungsgemäßer Vorgehensweise typischerweise bei mindestens 100 MPa liegt.

Ein wesentlicher Vorteil des erfindungsgemäßen Einsatzes des Machine Hammer Peenings ("MHP") gegenüber anderen an sich bekannten Verfahren zum Entfernen von an der Oberfläche von Werkstücken haftenden Schichten besteht darin, dass es bei diesem Bearbeitungsverfahren möglich ist, die Schlagparameter und den Bearbeitungsfortgang im Hinblick auf ein optimales Bearbeitungsergebnis gezielt auszulegen.

So lässt sich durch Einstellung einer bestimmten Schlagfrequenz, durch Wahl einer bestimmten Form oder Masse des Schlaghammer-Werkzeugs, durch Wahl einer bestimmten Vorschubgeschwindigkeit des Schlaghammer-Werkzeugs entlang der jeweiligen Bahn, durch die Wahl der Hube der vom Schlaghammer-Werkzeug ausgeführten Schlagbewegung oder durch die Wahl des Abstandes der von dem Schlagwerkzeug im Bereich seiner Auftreffbereich erzeugten Eindrücke in die Oberfläche des Formteils die im Auftreffbereich auf die zu entfernende Schicht wirkende Energie exakt so auslegen, dass einerseits der vom Schlaghammer-Werkzeug getroffene Bereich der Verbindungsschicht sicher vom Formteil abspringt, andererseits aber auch die gewünschte Kaltverfestigung und Erhöhung der Druckeigenspannung erzielt wird. Dabei versteht es sich von selbst, dass die Parameter der erfindungsgemäß vorgenommenen Schlagbearbeitung so optimiert werden können, dass die erzielte Kaltverfestigung oder Erhöhung der Druckeigenspannung gegenüber einer maximalen Entfernung der Verbindungsschicht zurücktritt, also bis gegen "null" gehen kann.

Als für die Praxis günstige Einstellbereiche haben sich Schlagfrequenzen von 20 - 500 Hz, insbesondere 100 - 500 Hz, und Hübe von bis zu 2 mm als zweckmäßig erwiesen, wobei dies die Möglichkeit einschließt, dass der praktisch messbare Hub gleich "0" ist, weil das jeweilige Hammersystem mit Vorspannung arbeitet, so dass der auf die zu bearbeitende Fläche treffende Schlaghammer praktisch keinen Schlaghub durchführt.

Für die erfindungsgemäße Bearbeitung haben sich Eindruckabstände der durch das Schlaghammer-Werkzeug auf der freien Oberfläche erzeugten Eindrücke von mehr als 0 mm bis 1 mm, insbesondere mindestens 0,05 mm, erwiesen.

Die Schlagfläche, mit der das Schlaghammer-Werkzeug auf das Formteil trifft, kann in an sich bekannter Weise kugelförmig ausgewölbt sein. Typischerweise beträgt der Durchmesser des kugelförmigen Abschnitts, an dem die Schlagfläche des Schlaghammer-Werkzeugs dann ausgebildet ist, 2 - 30 mm.

Die jeweils auf den bearbeiteten Oberflächenabschnitt treffende, bewegte Masse des Schlaghammer-Werkzeugs liegt dabei typischerweise im Bereich von 10 - 500 g.

Die Vorschubgeschwindigkeit, mit der das Schlaghammer-Werkzeug bei der erfindungsgemäßen MHP-Bearbeitung entlang der zuvor bestimmten Bahn geführt wird, liegt gleichzeitig typischerweise im Bereich von 400 - 6.000 mm/min.

Ebenso wie die voranstehend erläuterten Parameter der Schlagbearbeitung lässt sich beim erfindungsgemäßen Verfahren der Fortschritt der Schlagbearbeitung exakt planen. So folgt beim MHP das Schlaghammer-Werkzeug einer vorausgeplanten Bahn. Diese kann systematisch so geführt sein, dass der jeweils zu bearbeitende Oberflächenabschnitt innerhalb einer minimierten Zeit an jeder Stelle vom Werkzeug bearbeitet worden ist. Auf diese Weise lassen sich auch räumlich gekrümmte Flächenabschnitte zeitsparend und hoch effektiv von der auf ihnen haftenden Verbindungsschicht befreien. Ein Beispiel für eine solche Bahnführung ist eine Bahn, die nach Art eines Mäander- oder Spiralmusters über den zu bearbeitenden Abschnitt der Oberfläche des Formteils verläuft. Jedoch sind auch andere Bahnmuster, wie ein spiralförmiger Verlauf oder ein Verlauf in parallel ausgerichteten Linien, bei denen das Werkzeug nach jeder kontinuierlichen durchlaufenen Bahnlinie vom Formteil abgehoben und dann wieder für eine neue, anschließend wiederum kontinuierlich durchlaufene Bahnlinien versetzt auf das Formteil gesetzt wird.

Beispiele für die Anwendung des MHPs und der dabei eingestellten Parameter sind in der Fachliteratur vielfach zu finden. Beispielhaft werden hierzu

- der Artikel von Krall et al. "Robot based machine hammer peening using an electromagnetic driven hammering device", (2015), 10.2507/26th.daaam.proceedings.086,

- der Artikel "Mechanism of surface modification using machine hammer peening technology" von F. Bleicher, C. Lechner, C. Habersohn, E. Kozeschnik, B. Adjassoho, H. Kaminski, CIRP Annals - Manufacturing Technology 61 (2012) 375-378, ebenso veröffentlicht in Annals of DAAAM for 2012 & Proceedings of the 23rd International DAAAM Symposium, Volume 23, No.1, ISSN 2304-1382 ISBN 978-3-901509-91-9, CDROM version, Ed. B. Katalinic, Published by DAAAM International, Vienna, Austria, EU, 2012,

- der Artikel "Effect of Process Parameters on Surface Roughness in Hammer Peening and Deep Rolling" von M. Steitz, J. Scheil, C. Müller, P. Groche, Key Engineering Materials, ISSN: 1662-9795, Vols. 554-557 pp 1887-1901 https://www.scientific.net/KEM.554-557.1887,© 2013 Trans Tech Publications Switzerland

- der Artikel "Improving wear resistance of functional surfaces using the machine hammer peening technique", von M. Rodriguez Ripoll, F. Heindl, C. Lechner, C. Habersohn, M. Jech and F. Bleicher, erschienen in Tribology - Materials Surfaces & Interfaces · March 2014, DOI: 10.1179/1751584X14Y.0000000063

- Dissertation "Oberflächenbehandlung von Umformwerkzeugen durch Festklopfen" von Dr. Johannes Wied, Technische Universität Darmstadt, veröffentlicht unter der URL http://tuprints.ulb.tu-darmstadt.de/2487/

- Schulze, V. et al. "Surface modification by machine hammer peening and burnishing", CIRP annals manufacturing technology, Band 65, Heft 2, 2016, Seiten 809 - 832, siehe auch URL: https://publikationen.bibliothek.kit.edu/1000060939

Mit der Erfindung gelingt es, im Arbeitsschritt b) des erfindungsgemäßen Verfahrens mindestens 90 % der nach dem Arbeitsschritt a) auf dem im Arbeitsschritt b) bearbeiteten Abschnitt der freien Oberfläche des Formteils vorhandenen Verbindungsschicht zu entfernen. So haben praktische Versuche bestätigt, dass bei erfindungsgemäßer Vorgehensweise regelmäßig mindestens 95 % der im jeweils bearbeiteten Abschnitt vorhandenen Verbindungsschicht regelmäßig entfernt worden sind.

Nachfolgend wird die Erfindung anhand einer ein Ausführungsbeispiel darstellenden Zeichnung näher erläutert. Es zeigen jeweils schematisch:

Fig. 1          ein Formteil, das als Wassermantelkern für die gießtechnische Herstellung eines Motorblocks für einen Verbrennungsmotor dient, in einer perspektivischen Ansicht.

Fig. 2a - f     Flächenabschnitte des Formteils gemäß Fig. 1, die einer erfindungsgemäßen Bearbeitung unterzogen worden sind, jeweils in einer Draufsicht;

Fig. 3          das Formteil in einer Ansicht von oben;

Fig. 4a     das Formteil bei der Bearbeitung eines seiner in Fig. 2 dargestellten Flächenabschnitte durch ein Schlaghammer-Werkzeug in einer Ansicht von oben;

Fig. 4b     das Formteil bei der Bearbeitung des Flächenabschnitts durch das Schlaghammer-Werkzeug in einer frontalen Ansicht auf die Stirnseite des Formteils;

Fig. 4c     das Formteil bei der Bearbeitung des Flächenabschnitts durch das Schlaghammer-Werkzeug in einer perspektivischer Ansicht;

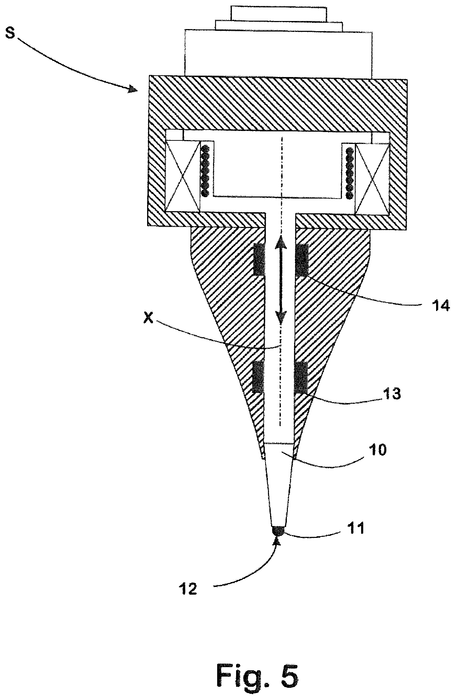

Fig. 5     ein für die Bearbeitung von Abschnitten der Oberfläche des Formteils gemäß Fig. 1 eingesetztes Schlaghammer-Werkzeug in einem Längsschnitt;

Fig. 6     einen Ausschnitt eines Schliffs eines oberflächennahen Querschnittbereichs des Formteils im nitriergehärten Zustand;

Fig. 7a,7b     eine vergrößerte Darstellung von Flächenabschnitten nach der Bearbeitung mittels maschinellen Hammer Peenings;

Fig. 8a     eine rasterelektronenmikroskopische Aufnahme eines Oberflächenausschnitts eines erfindungsgemäß behandelten Formteils;

Fig. 8b     eine rasterelektronenmikroskopische Aufnahme eines Oberflächenausschnitts eines nicht erfindungsgemäß behandelten Formteils;

Fig. 8c     eine rasterelektronenmikroskopische Aufnahme eines Oberflächenausschnitts eines nach einer Gasnitrierung nicht behandelten Formteils;

Fig. 9a - 9c     schematische Darstellungen der Lage und Ausrichtung des Kippwinkels ßt, des Anstellwinkels ßa und des Auftreffwinkels ßi.

Das zum Gießen eines Motorblocks für einen Verbrennungsmotor in einer Druckgießform vorgesehene Formteil W (Wassermantelkern) ist in üblicher Weise durch spanabhebende Bearbeitung aus einem Stahlblock hergestellt worden, der aus dem Stahl 1.2340 ("E38K") bestand.

Das so bereitgestellte Formteil W ist in einem konventionell durchgeführten Gasnitrieren unter einer dementsprechend konventionell zusammengesetzten NH3 enthaltenden Nitrier-Atmosphäre gehalten worden.

Durch das Gasnitrieren hat sich an dem Formteil eine an die Oberfläche O des Formteils W angrenzende Randschicht R ergeben. Die Randschicht R umfasst eine Diffusionsschicht D, deren Härte durch in diese Diffusionsschicht D eindiffundierte Stickstoffatome gegenüber der Härte des Kernmaterials K des Formteils W gesteigert ist.

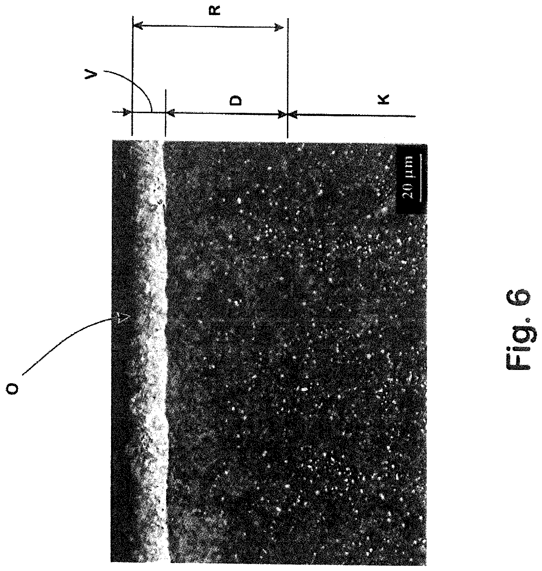

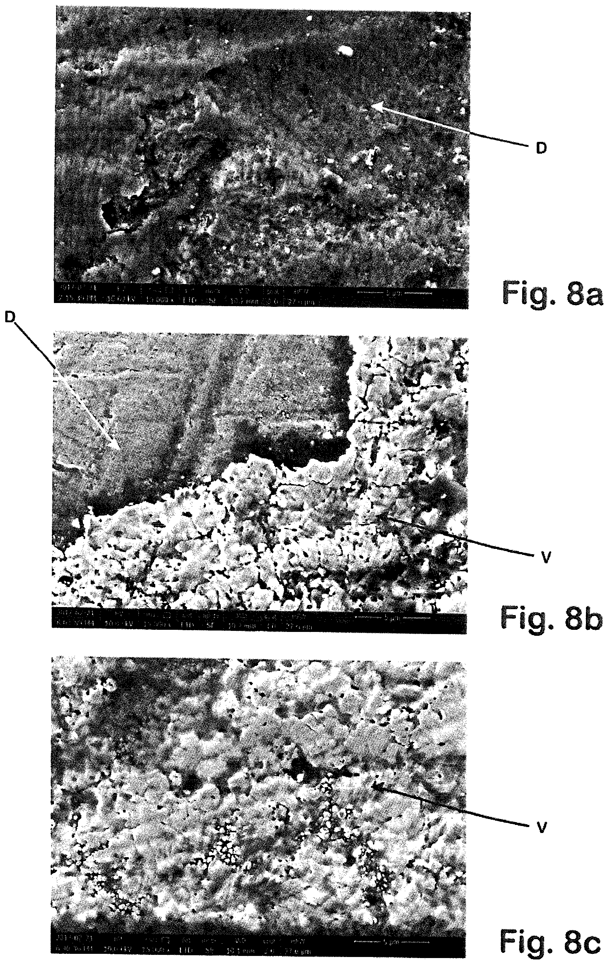

Zudem umfasst die Randschicht R eine Verbindungsschicht V, die nach dem Gasnitrieren auf der Oberfläche O des Formteils W vorhanden ist und die Diffusionsschicht D der Randschicht R abdeckt (Fig. 6). In Fig. 8c ist diese Verbindungsschicht V als weißer, den dort gezeigten Flächenabschnitt vollständig bedeckender Belag ("white layer") erkennbar.

Nach der Nitrierbehandlung ist das Formteil W in einem Betriebsversuch in eine konventionelle Druckgussform gesetzt worden. Unter den betriebsüblichen Bedingungen sind dann mit ihm in der Druckgussform Motorblöcke gegossen worden. Dabei ist das Formteil W regelmäßigen Temperaturschwankungen von 111 - 377 °C unterworfen worden. Die Zykluszeit betrug 100 s.

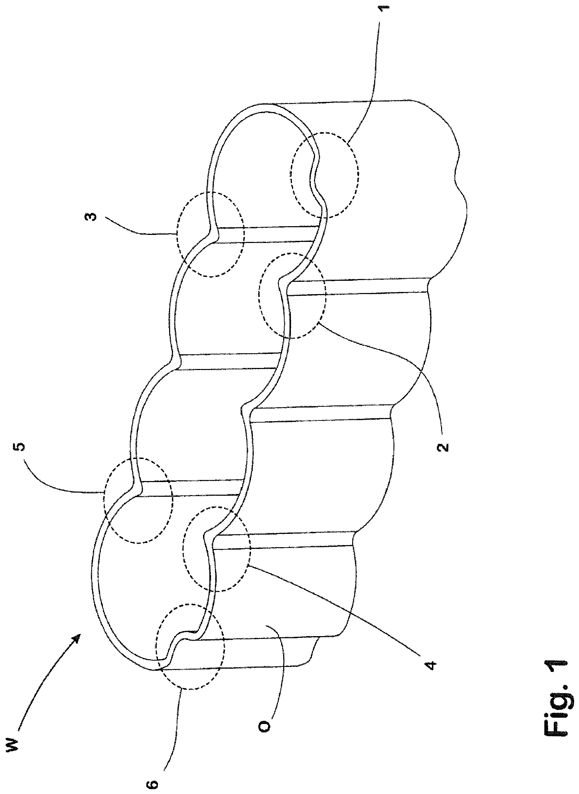

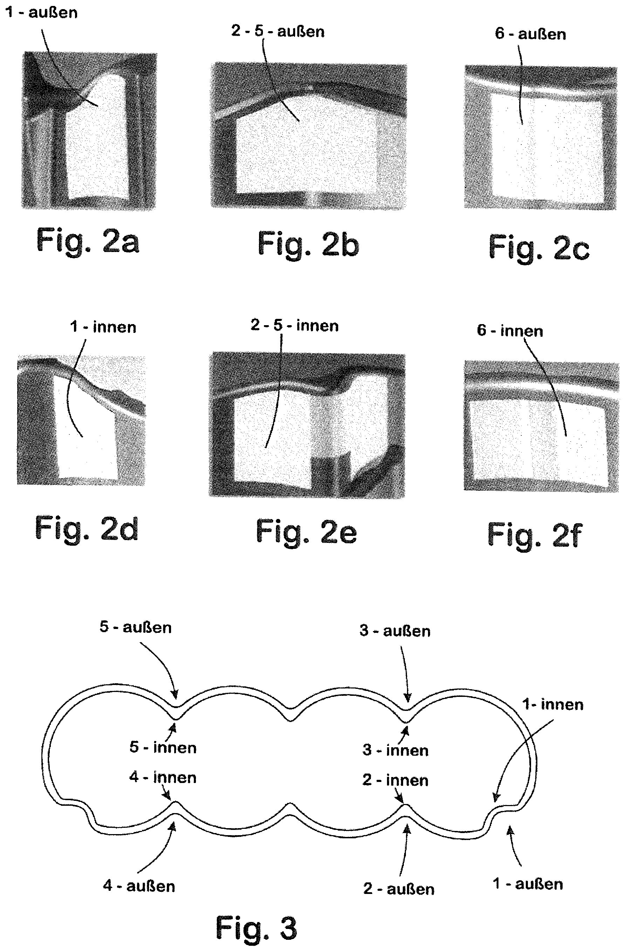

Nach einer Einsatzdauer von 10.000 Schuss, d.h. 10.000 gegossenen Teilen, sind die freien Oberflächen O des Formteils W an dessen Innen- und Außenseite auf Rissbildung untersucht worden. Als kritisch haben sich dabei die Abschnitte 1 - 6 der Oberflächen O herausgestellt, wobei in diesen Abschnitten sowohl die Flächenabschnitte an der Innenseite "innen" als auch an der Außenseite "außen" betroffen waren (s. Fig. 1 und 3).

Zur Vermeidung derartiger Rissbildungen sind bei einer weiteren Ausführung des Formteils W nach einer ebenfalls in der oben beschriebenen Weise durchgeführten Randschichthärtung die Abschnitte 1 - 6 innen und 1 - 6 außen mit einem Schlaghammer-Werkzeug S bearbeitet worden. Zum Einsatz gekommen ist dazu ein handelsübliches Schlaghammer-Werkzeug S, wie es auch bereits bei den Verfahren eingesetzt worden ist, die in den oben erwähnten Artikeln beschrieben sind. Ein Beispiel für eine konkrete Ausführung für ein solches Werkzeug ist in der WO 2007/016919 A1 dargestellt. Deshalb werden hier nur die für das Verständnis der Erfindung erforderlichen Elemente dieses Werkzeugs S erläutert.

Das Schlaghammer-Werkzeug S wies demnach einen Stößel 10 auf, der an seinem freien Ende als Hammerkopf einen kugelförmigen Einsatz 11 aus einem Karbid-Material, der eine kugelförmig ausgewölbte Schlagfläche 12 besitzt, mit der das Schlaghammer-Werkzeug S bei der Bearbeitung auf seine Auftrefffläche im jeweils bearbeiteten Flächenabschnitt 1 - 6 trifft. Der Stößel 10 ist in Axialgleitlagern 13,14 gelagert, so dass er eine Linearbewegung entlang einer koaxial zu ihm ausgerichteten Bewegungsachse X durchführt.

Zur jeweils an der Innen- ("innen") und an der Außenseite ("außen") der Flächenabschnitte 1 - 6 erfolgenden Bearbeitung ist das Schlaghammer-Werkzeug S in Bezug zum jeweiligen Flächenabschnitt 1 - 6 so ausgerichtet worden, dass die Bewegungsachse X seiner Schlagbewegung mit der Flächennormalen FN auf den jeweiligen Abschnitt 1 - 6 "innen" / "außen" Winkel (Kippwinkel ßt, Anstellwinkel ßa, Auftreffwinkel ßi) eingeschlossen haben, die jeweils im Bereich von 25° bis 45° lagen. (Figuren 4a - 4c)

Die Parameter der an den einzelnen Flächenabschnitten 1 - 6 vorgenommenen MHP-Bearbeitungen sind in Tabelle I angegeben.

Die darüber hinaus wesentlichen Betriebsparameter des Schlaghammer-Werkzeugs S sind in Tabelle II aufgeführt, wobei mit der Zyklus-Zeit die Zeit bezeichnet ist, die für die Bearbeitung des jeweiligen Flächenabschnitts 1 - 6 benötigt worden ist.

Bei der Bearbeitung ist das Schlaghammer-Werkzeug S in einer mäanderförmigen Bahn P unterbrechungsfrei über den jeweils bearbeiteten Abschnitt 1 - 6 der freien Oberfläche O des Formteils W geführt worden.

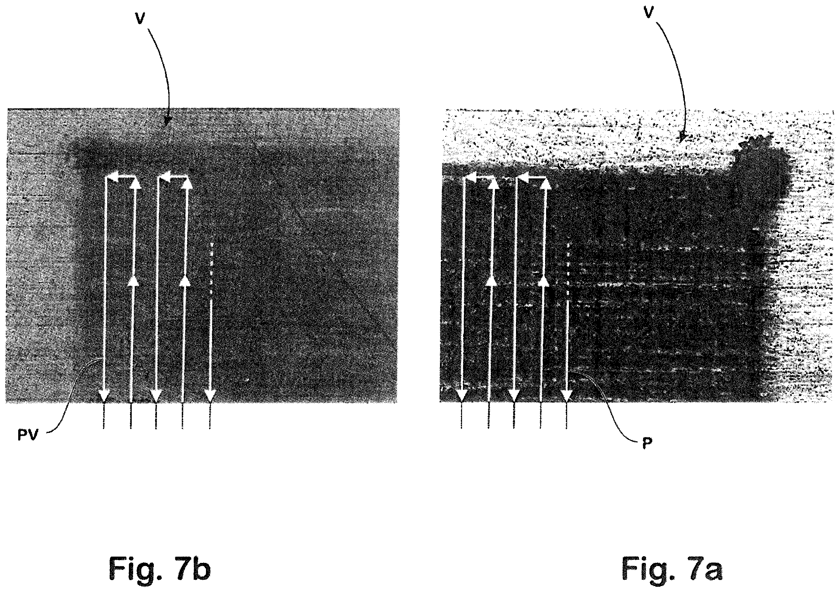

Fig. 7a zeigt einen repräsentativen vergrößerten Ausschnitt eines der Flächenabschnitte 2 innen, 3 außen und 4 außen, bei denen die Bewegungsachse X des Werkzeugs S unter einem Winkel von 30° zur Flächennormalen FN auf den jeweiligen Flächenabschnitt ausgerichtet gewesen ist. Die über einen jeweils 0,1 mm breiten Überlappungsbereich einander überlappenden Mäanderabschnitte der vom Werkzeug S abgefahrenen Bahn P sind dort genauso klar zu erkennen wie die Tatsache, dass die weißliche Verbindungsschicht V im erfindungsgemäß bearbeiteten, dunkel erscheinenden Bereich durch das maschinelle Oberflächenhämmern mit dem Schlaghammer-Werkzeug S weitestgehend vollständig, d.h. zu mindestens 95 %, entfernt worden ist.

Zum Vergleich ist an den Flächenabschnitten 2 außen und 5 außen des Wassermantels W das Schlaghammer-Werkzeug S jeweils senkrecht (Winkel ßt, ßa, ßi = 0) zum jeweils bearbeiteten Flächenabschnitt ausgerichtet worden, so dass die Bewegungsachse X mit der Flächennormalen FN zusammenfiel. Die Parameter der Vergleichsbearbeitung stimmten im Übrigen mit den in Tabelle II angegebenen Parametern überein.

Aus Fig. 7b ist ersichtlich, dass bei dem so bearbeiteten Oberflächenabschnitt zwar der Flächenabschnitt, den das Schlaghammer-Werkzeug S einer Bahn PV folgend bearbeitet hat, ebenfalls durch die dunkle Färbung sichtbar ist, dass aber der vom Werkzeug S bearbeitete Bereich nach wie vor von der weißlichen Verbindungsschicht V bedeckt ist. Demzufolge besteht dort, anders als bei dem in Fig. 7a dargestellten, in erfindungsgemäßer Weise bearbeiteten Flächenabschnitt, nach wie vor die Gefahr, dass sich in der Nitridschicht Mikrorisse bilden, die den Keim für in das Formteil 2 eindringende Risse bilden.

Fig. 8c zeigt einen Oberflächenabschnitt des Formteils W unmittelbar nach dem Gasnitrieren. Die Verbundschicht V ist dort als weißlicher Belag zu erkennen, der den gesamten Oberflächenabschnitt belegt.

Fig. 8b zeigt einen Oberflächenabschnitt des Formteils W nach einer MHP-Behandlung, bei der das Schlaghammer-Werkzeug S senkrecht auf die zu bearbeitende Oberfläche gerichtet worden ist (ß = 0°). Ersichtlich ist die weißliche Verbundschicht V dort nur unvollkommen entfernt worden, so dass die dunkler erscheinende Oberfläche der Diffusionsschicht D nur einen kleineren Teil des dargestellten Oberflächenabschnitts einnimmt.

Fig. 8a zeigt einen Oberflächenabschnitt des Formteils W nach einer erfindungsgemäß ausgeführten MHP-Behandlung, bei der das Schlaghammer-Werkzeug S unter einem Winkel von 45° ausgerichtet worden ist. Die im Wesentlichen vollständig freigelegte dunklere Oberfläche der Diffusionsschicht D nimmt hier den gesamten Oberflächenabschnitt ein.

Mit dem erfindungsgemäßen Verfahren lassen sich somit Formteile für Gießformen für den Leichtmetallguss so behandeln, dass die Gefahr einer Rissbildung im Bereich der mit der Leichtmetallschmelze beim Abguss in Kontakt kommenden Oberflächenabschnitte des Formteils auf ein Minimum reduziert ist. Dies wird gemäß der Erfindung dadurch erreicht, dass in einem Arbeitsschritt a) durch eine Nitrierbehandlung an dem Formteil eine an dessen freien Oberfläche angrenzende nitriergehärtete Randschicht erzeugt wird, die härter ist als der innenliegende Kernbereich des Formteils und eine an den Kernbereich angrenzende Diffusionsschicht sowie eine auf der Diffusionsschicht liegende und an die freie Oberfläche des Formteils angrenzende Verbindungsschicht umfasst, und dass dann in einem Arbeitsschritt b) mindestens ein Abschnitt der Oberfläche des Formteils durch maschinelles Oberflächenhämmern mechanisch bearbeitet wird, bei dem ein Schlaghammer-Werkzeug, das in einer bestimmten Schlagfrequenz eine Schlagbewegung entlang einer Bewegungsachse ausführt, die in Bezug auf die freie Oberfläche unter einem bestimmten spitzen Winkel ausgerichtet ist, einer in einem vorausgegangenen Auslegungsschritt bestimmten Bahn folgend kontinuierlich über die freie Oberfläche des Formteils geführt wird, so dass durch die schlagende Belastung im Auftreffbereich des Schlaghammer-Werkzeugs die Verbindungsschicht entfernt wird.

Tabelle 1

| Flächenabschnitt | Lage | Einschlagtiefe [mm] | β [°] | Zykluszeit [s] | Bearbeitete Fläche [mm$^2$] |
|---|---|---|---|---|---|
| 1 | Innen | 0,35 | 25 | 411 | 804 |
| 1 | außen | 0,35 | 25 | 438 | 809 |
| 2 | innen | 0,35 | 30 | 1158 | 2277 |
| 2 | außen | 0,35 | 0 | 1104 | 2181 |
| 3 | innen | 0,35 | 40 | 356 | 711 |
| 3 | außen | 0,35 | 30 | 502 | 547 |
| 4 | innen | 0,35 | 40 | 1145 | 2255 |
| 4 | außen | 0,35 | 30 | 1090 | 2153 |
| 5 | innen | 0,35 | 40 | 1286 | 2140 |
| 5 | außen | 0,35 | 0 | 1090 | 2153 |
| 6 | innen | 0,35 | 40 | 245 | 477 |
| 6 | außen | 0,35 | 25 | 164 | 311 |

Tabelle 2

| | |
|---|---|
| Schlagfrequenz | 200 Hz |
| Hub | 0,35 mm |
| Bewegte Masse | 280 g |
| Vorschubgeschwindigkeit | 1.200 mm/min |
| Abstand der Eindrücke | 0,1 mm |
| Überlappung der Mäanderabschnitte | 0,1 mm |
| Durchmesser des Kugeleinsatzes 11 | 6 mm |
| Geschwindigkeit, mit der das Schlaghammer-Werkzeug entlang der Bahn P,PV bewegt wird | 1200 mm/min |
| Verlauf der Bahnen P,PV | mäanderförmig |

**BEZUGSZEICHEN**

| | |
|---|---|
| ßa | Anstellwinkel |
| ßi | Auftreffwinkel |
| ßt | Kippwinkel |
| B | Berührpunkt des Hammerkopfs 11 mit der zu bearbeitenden Oberfläche O des Formteils W |
| D | Diffusionsschicht |
| E_VF | Ebene "Vorschubrichtung - Flächennormale" |
| E_QV | normal zur bearbeitenden Oberfläche und quer zur Vorschubrichtung VR ausgerichtete Ebene |
| FN | Flächennormale |

| K | Kernbereich des Formteils W |
| O | Oberfläche des Formteils W |
| P,PV | Bahn, der das Schlaghammer-Werkzeug S bei der Bearbeitung folgt |
| R | nitriergehärtete Randschicht |
| S | Schlaghammer-Werkzeug |
| V | Verbindungsschicht |
| VR | Vorschubrichtung des Schlaghammer-Werkzeugs S entlang der jeweiligen Bahn P,PV |
| W | Formteil (Wassermantelkern) |
| X | Bewegungsachse des Schlaghammer-Werkzeugs S |

| 1 - 6 | Abschnitte der freien Oberfläche O des Formteils W |
| 10 | Stößel |
| 11 | kugelförmiger Einsatz (Hammerkopf) |
| 12 | Schlagfläche |
| 13,14 | Gleitlager |

**Patentansprüche**

1. Verfahren zum Behandeln der Oberflächen (O) von aus einem Stahlwerkstoff bestehenden Formteilen (W) für Gießformen, welche zur gießtechnischen Herstellung von Gussteilen aus einer Leichtmetallschmelze vorgesehen sind, umfassend folgende Arbeitsschritte:

   a) Nitrierbehandeln des Formteils (W) zur Erzeugung einer an die freie Oberfläche (O) des Formteils (W) angrenzenden nitriergehärteten Randschicht (R), welche eine höhere Härte aufweist als der innenliegende Kernbereich (K) des Formteils (W) und eine an den Kernbereich (K) angrenzende Diffusionsschicht (D) sowie eine auf der Diffusionsschicht (D) liegende und an die freie Oberfläche (O) des Formteils (W) angrenzende Verbindungsschicht (V) umfasst;
   b) mechanisches Bearbeiten mindestens eines Abschnitts (1 - 6) der freien Oberfläche (O) des Formteils (W), wobei die mechanische Bearbeitung durch maschinelles Oberflächenhämmern erfolgt, bei dem ein Schlaghammer-Werkzeug (S), das in einer bestimmten Schlagfrequenz eine Schlagbewegung entlang einer Bewegungsachse (X) ausführt, die in Bezug auf die freie Oberfläche (O) unter einem bestimmten spitzen Winkel (ßa,ßi,ßt) ausgerichtet ist, einer in einem vorausgegangenen Auslegungsschritt bestimmten Bahn (P,PV) folgend kontinuierlich über die freie Oberfläche (O) des Formteils (W) geführt wird, so dass durch die schlagende Belastung im Auftreffbereich des Schlaghammer-Werkzeugs (S) die Verbindungsschicht (V) entfernt wird.

2. Verfahren nach Anspruch 1,dad urch gekennzeichnet, dass die Nitrierbehandlung als Gasnitrieren durchgeführt wird, bei dem das Formteil (W) unter einer stickstoffhaltigen Atmosphäre gehalten wird, als Badnitrieren oder als Plasmanitrieren durchgeführt wird.

3. Verfahren nach einem der voranstehenden Ansprüche, **dadurch gekennzeichnet, dass** das Schlaghammer-Werkzeug (S) eine kugelförmig gewölbte Schlagfläche aufweist, mit der das Schlaghammer-Werkzeug (S) auf Formteil (W) trifft.

4. Verfahren nach Anspruch 3, **dadurch gekennzeichnet, dass** das Schlaghammer-Werkzeug (S) mindestens an seinem auf die zu bearbeitende Oberfläche treffenden Abschnitt aus einem Karbid-Material besteht.

5. Verfahren nach Anspruch 4, **dadurch gekennzeichnet, dass** das Schlaghammer-Werkzeug (S) an seinem aus Karbid-Material bestehenden Abschnitt eine Härte von mindestens 2000 HV aufweist.

6. Verfahren nach einem der voranstehenden Ansprüche, **dadurch gekennzeichnet, dass** die Bewegungsachse (X) des Schlaghammer-Werkzeugs (S) mit einer auf dem jeweils bearbeiteten Abschnitt (1 - 6) der freien Oberfläche (O) des Formteils (W) errichteten Flächennormalen (FN) einen Winkel (ßa,ßi,ßt) von 15-50° einschließt.

7. Verfahren nach Anspruch 6, **dadurch gekennzeichnet, dass** der eingeschlossene Winkel (ßa,ßi,ßt) 20 - 45 ° beträgt.

8. Verfahren nach Anspruch 7, **dadurch gekennzeichnet, dass** der eingeschlossene Winkel (ßa,ßi,ßt) 30° $\pm$ 7° beträgt.

9. Verfahren nach einem der voranstehenden Ansprüche, **dadurch gekennzeichnet, dass** die Schlagfrequenz des Schlaghammer-Werkzeugs 20 - 500 Hz beträgt.

10. Verfahren nach einem der voranstehenden Ansprüche, **dadurch gekennzeichnet, dass** der Hub der vom Schlaghammer-Werkzeug (S) ausgeführten Schlagbewegung bis zu 2 mm beträgt.

11. Verfahren nach einem der voranstehenden Ansprüche, **dadurch gekennzeichnet, dass** im Arbeitsschritt b) mindestens 90 % der nach dem Arbeitsschritt a) auf dem im Arbeitsschritt b) bearbeiteten Abschnitt der freien Oberfläche (O) des Formteils (W) vorhandenen Verbindungsschicht (N) entfernt werden.

12. Verfahren nach einem der voranstehenden Ansprüche, **dadurch gekennzeichnet, dass** der Eindruckabstand der durch das Schlaghammer-Werkzeug (S) auf der freien Oberfläche erzeugten Eindrücke >0 bis 1 mm beträgt.

13. Verfahren nach einem der voranstehenden Ansprüche, **dadurch gekennzeichnet, dass** die Vorschubgeschwindigkeit, mit der das Schlaghammer-Werkzeug (S) bewegt wird, 400 - 6.000 mm/min beträgt.

14. Verfahren nach einem der voranstehenden Ansprüche, **dadurch gekennzeichnet, dass** die Bahn (P,PV), der das Schlaghammer-Werkzeug (S) im Arbeitsschritt b) folgt, nach Art eines Mäander- oder nach Art eines Spiralmusters verläuft.

15. Verfahren nach einem der voranstehenden Ansprüche, **dadurch g**ekennzeichnet, dass** das Schlaghammer-Werkzeug (S) von einer numerisch gesteuerten Stelleinrichtung mit zwei oder mehr Bewegungsachsen entlang der zuvor festgelegten Bahn (P,PV) geführt wird.

**Claims**

1. Method of treating the surfaces (O) of mould parts (W) consisting of a steel material for casting moulds which are provided for the casting-related manufacture of cast parts from a light metal melt, comprising the following work steps:

   a) Nitrate treating the mould part (W) to generate a nitride-hardened edge layer adjoining the free surface (O) of the mould part (W) which has a greater hardness than the inner core region (K) of the mould part (W) and comprises a diffusion layer (D) adjoining the core region (K) and a compound layer (V) located on the diffusion layer (D) and adjoining the free surface (O) of the mould part (W);
   b) mechanical processing of at least one section (1 - 6) of the free surface (O) of the mould part (W), wherein the mechanical processing is carried out by machine surface hammering, in the case of which a hammer tool (S), which performs an impact movement along a movement axis (X) at a certain impact frequency, said movement axis (X) being aligned in relation to the free surface (O) at a determined acute angle ($\beta a, \beta i, \beta t$), is guided continually over the free surface (O) of the mould part (W) following a track (P, PV) determined in a preceding design step such that the compound layer (V) is removed by the impact stress in the impact region of the hammer tool (S).

2. Method according to claim 1, **characterised in that** the nitride treatment is carried out as gas nitriding, in the case of which the mould part (W) is held under a nitrogen-containing atmosphere, as bath nitriding or as plasma nitriding.

3. Method according to any one of the preceding claims, **characterised in that** the hammer tool (S) has a spherically vaulted impact surface, with which the hammer tool (S) impacts the mould part (W).

4. Method according to claim 3, **characterised in that** the hammer tool (S) consists of a carbide material at least on its section impacting the surface to be processed.

5. Method according to claim 4, **characterised in that** the hammer tool (S) has a hardness of at least 2000 HV on its section consisting of carbide material.

6. Method according to any one of the preceding claims, **characterised in that** the movement axis (X) of the hammer tool (S) forms an angle ($\beta a, \beta i, \beta t$) of 15 - 50° with a surface normal (FN) established on the respectively processed section (1 - 6) of the free surface (O) of the mould part (W).

7. Method according to claim 6, **characterised in that** the angle (βa,βi,βt) formed is 20 - 45°.

8. Method according to claim 7, **characterised in that** the angle (βa,βi,βt) formed is 30° ± 7°.

9. Method according to any one of the preceding claims, **characterised in that** the impact frequency of the hammer tool is 20 - 500 Hz.

10. Method according to any one of the preceding claims, **characterised in that** the stroke of the impact movement performed by the hammer tool (S) is up to 2 mm.

11. Method according to any one of the preceding claims, **characterised in that** in work step b) at least 90% of the compound layer (N) present after work step a) on the section of the free surface (O) of the mould part (W) processed in work step b) is removed.

12. Method according to any one of the preceding claims, **characterised in that** the impression distance of the impressions generated by the hammer tool (S) on the free surface is >0 to 1 mm.

13. Method according to any one of the preceding claims, **characterised in that** the travel speed, at which the hammer tool (S) is moved, is 400 - 6,000 mm/min.

14. Method according to any one of the preceding claims, **characterised in that** the track (P, PV), which the hammer tool (S) follows in work step b), runs in the manner of a meander pattern or in the manner of a spiral pattern.

15. Method according to any one of the preceding claims, **characterised in that** the hammer tool (S) is guided by a numerically-controlled adjustment device with two or more movement axes along the previously specified track (P, PV).

## Revendications

1. Procédé permettant de traiter des surfaces (O) de pièces moulées (W) constituées par un matériau d'acier pour des moules de coulée, lesquelles sont prévues pour la fabrication par technique de moulage d'éléments moulés à partir d'une masse fondue de métal léger, comportant les étapes de travail suivantes :

   a. traitement aux nitrites de la pièce moulée (W) pour générer une couche de bord (R) durcie par nitruration, adjacente à la surface libre (O) de la pièce moulée (W), laquelle présente une dureté supérieure que la zone de noyau (K) interne de la pièce moulée (W) et qui comprend une zone de diffusion (D) adjacente à la zone de noyau (K) ainsi qu'une zone de liaison (V) située sur la couche de diffusion (D) et adjacente à la surface libre (O) de la pièce moulée (W) ;
   b. traitement mécanique d'au moins une section (1 - 6) de la surface libre (O) de la pièce moulée (W), le traitement mécanique ayant lieu par un martelage machinal en surface, lors duquel un outil de percussion (S), lequel effectue un mouvement de percussion à une fréquence de percussion déterminée le long d'un axe de déplacement (X) qui est orienté, par rapport à la surface libre (O), avec un angle aigu (βa, βi, βt) déterminé, est guidé en continu, en suivant un trajet (P, PV) déterminé dans une étape de conception préalable, sur la surface libre (O) de la pièce moulée (W) de telle sorte que la sollicitation par percussion élimine la couche de liaison (V) dans la zone de contact de l'outil de percussion (S).

2. Procédé selon la revendication 1, **caractérisé en ce que** le traitement aux nitrites est effectué en tant que nitruration gazeuse, lors de laquelle la pièce moulée (W) est maintenue sous une atmosphère contenant de l'azote, en tant que nitruration au bain ou en tant que nitruration au plasma.

3. Procédé selon l'une des revendications précédentes, **caractérisé en ce que** l'outil de percussion (S) présente une surface de percussion courbe sphérique, avec laquelle l'outil de percussion (S) touche le pièce moulée (W).

4. Procédé selon la revendication 3, **caractérisé en ce que** l'outil de percussion (S) se compose au moins sur sa section touchant la surface à traiter d'un matériau de type carbure.

5. Procédé selon la revendication 4, **caractérisé en ce que** l'outil de percussion (S) présente une dureté d'au moins 2 000 HV sur sa section se composant d'un matériau de type carbure.

6. Procédé selon l'une des revendications précédentes, **caractérisé en ce que** l'axe de déplacement (X) de l'outil de percussion (S) avec une normale à la surface (FN) établie sur la section (1 - 6) de la surface libre (O) de la pièce moulée (W) respectivement traitée forme un angle (βa, βi, βt) de 15 - 50°.

7. Procédé selon la revendication 6, **caractérisé en ce que** l'angle inclus (βa, βi, βt) est de 20 - 45 °.

8. Procédé selon la revendication 7, **caractérisé en ce que** l'angle inclus (βa, βi, βt) est de 30° $\pm$ 7°.

9. Procédé selon l'une des revendications précédentes, **caractérisé en ce que** la fréquence de battement de l'outil de percussion est de 20 - 500 Hz.

10. Procédé selon l'une des revendications précédentes, **caractérisé en ce que** la course du mouvement de percussion effectuée par l'outil de percussion (S) peut atteindre 2 mm.

11. Procédé selon l'une des revendications précédentes; **caractérisé en ce que** dans l'étape de travail b) au moins 90 % de la couche de liaison (N), présente après l'étape de travail a) sur la section de la surface libre (O) de la pièce moulée (W) traitée dans l'étape de travail b), est éliminée.

12. Procédé selon l'une des revendication précédentes, **caractérisé en ce que** la distance d'impression des impressions générées par l'outil de percussion (S) sur la surface libre peut être > 0 jusqu'à 1 mm.

13. Procédé selon l'une des revendications précédentes, **caractérisé en ce que** la vitesse d'avancement, avec laquelle l'outil de percussion (S) est déplacé, est de 400 - 6 000 mm/min.

14. Procédé selon l'une des revendications précédentes, **caractérisé en ce que** le trajet (P, PV) suivi par l'outil de percussion (S) dans l'étape de travail b), se déroule selon un motif en méandre ou selon un motif en spirale.

15. Procédé selon l'une des revendications précédentes, **caractérisé en ce que** l'outil de percussion (S) est guidé par un dispositif de réglage à commande numérique avec deux ou plusieurs axes de déplacement le long du trajet (P, PV) fixée auparavant.

Fig. 1

EP 3 635 150 B1

1 - außen

Fig. 2a

2 - 5 - außen

Fig. 2b

6 - außen

Fig. 2c

1 - innen

Fig. 2d

2 - 5 - innen

Fig. 2e

6 - innen

Fig. 2f

5 - außen    3 - außen    1- innen

5 - innen    3 - innen

4 - innen    2 - innen

4 - außen    2 - außen    1 - außen

Fig. 3

15

Fig. 4a

Fig. 4b

Fig. 4c

EP 3 635 150 B1

S

X

14

13

10

11

12

# Fig. 5

Fig. 6

EP 3 635 150 B1

Fig. 7a

Fig. 7b

Fig. 8a

Fig. 8b

Fig. 8c

Fig. 9a       Fig. 9b       Fig. 9c

EP 3 635 150 B1

**EP 3 635 150 B1**

**IN DER BESCHREIBUNG AUFGEFÜHRTE DOKUMENTE**

**In der Beschreibung aufgeführte Patentdokumente**

- WO 2011142479 A1
- EP 2484493 A1
- DE 19946957 C1
- WO 2007016919 A1

**In der Beschreibung aufgeführte Nicht-Patentliteratur**

- **KRALL et al.** *Robot based machine hammer peening using an electromagnetic driven hammering device,* 2015
- **F. BLEICHER ; C. LECHNER ; C. HABERSOHN ; E. KOZESCHNIK ; B. ADJASSOHO ; H. KAMINSKI.** Mechanism of surface modification using machine hammer peening technology. *CIRP Annals - Manufacturing Technology,* 2012, vol. 61, 375-378
- Annals of DAAAM for 2012 & Proceedings of the 23rd International DAAAM Symposium. DAAAM International, 2012, vol. 23
- Effect of Process Parameters on Surface Roughness in Hammer Peening and Deep Rolling. **M. STEITZ ; J. SCHEIL ; C. MÜLLER ; P. GROCHE.** Key Engineering Materials. Trans Tech Publications Switzerland, vol. 554-557, 1887-1901
- **M. RODRIGUEZ RIPOLL ; F. HEINDL ; C. LECHNER ; C. HABERSOHN ; M. JECH ; F. BLEICHER.** Improving wear resistance of functional surfaces using the machine hammer peening technique. *Tribology - Materials Surfaces & Interfaces,* Marz 2014
- **DR. JOHANNES WIED.** Oberflächenbehandlung von Umformwerkzeugen durch Festklopfen. Technische Universität Darmstadt
- **SCHULZE, V. et al.** Surface modification by machine hammer peening and burnishing. *CIRP annals manufacturing technology,* 2016, vol. 65, 809-832, https://publikationen.bibliothek.kit.edu/1000060939